# EUROPÄISCHE PATENTSCHRIFT

(11) **EP 1 975 471 B1**
(45) Veröffentlichungstag und Bekanntmachung des Hinweises auf die Patenterteilung: **17.11.2010**
(21) Anmeldenummer: 08101127.2
(22) Anmeldetag: 31.01.2008
(51) Int. Cl.: F16H 59/10

(54) **Steuergerät eines automatischen Getriebes mit einer Wählhebelstellungs-Detektoreinrichtung**
Control device of an automatic transmission system with a selector lever adjustment detector device
Appareil de commande d'un engrenage automatique doté d'un dispositif de détecteur à réglage de levier sélectif

(30) Priorität: 26.03.2007 DE 102007014354
(43) Veröffentlichungstag der Anmeldung: 01.10.2008
(73) Patentinhaber: ROBERT BOSCH GMBH, 70442 Stuttgart (DE)
(72) Erfinder: Ilic, Erich, 72805 Unterhausen (DE); Heim, Michael, 71088 Holzgerlingen (DE)

(56) Entgegenhaltungen:
- EP-A- 1 489 339
- DE-A1-102005 020 926
- JP-A- 2 003 741
- JP-A- 8 329 782
- JP-A- 2003 139 228

## Beschreibung

Die Erfindung betrifft ein Steuergerät eines automatischen Getriebes für ein Kraftfahrzeug, mit einer Wählhebelstellungs-Detektoreinrichtung, die einen auf eine fahrzeugsseitige Welle aufsetzbaren Winkelstellungsdetektor aufweist, wobei sich die Welle abhängig von der Stellung eines Wählhebels in ihrer Drehwinkelstellung verändert und der Winkelstellungsdetektor einen drehfest mit der Welle kuppelbaren Detektorrotor und einen ortsfest im Steuergerät angeordneten Detektorstator aufweist.

### Stand der Technik

Ein derartiges Steuergerät ist bekannt. Dabei wird je nach Anbauort des Steuergeräts im Kraftfahrzeug zwischen einem Einbausteuergerät, einem Anbausteuergerät und einem Wegbausteuergerät unterschieden. Einbausteuergeräte sind dadurch gekennzeichnet, dass das Steuergerät direkt in das Getriebe des Kraftfahrzeugs integriert wird. Anbausteuergeräte werden außen an einem Gehäuseteil des Getriebes montiert. Sogenannte Wegbausteuergeräte werden separat vom Getriebe im Kraftfahrzeug montiert. Üblicherweise werden Wegbausteuergeräte in einem Fahrgastraum des Kraftfahrzeugs montiert. Einbausteuergeräte und Anbausteuergeräte haben den Vorteil einer direkten Montage am oder im Getriebe. Eine Verkabelung zwischen dem Einbau- oder Anbausteuergerät und Getriebesensoren und Aktuatoren kann kurz ausgeführt werden. Einbau- und Anbausteuergeräte müssen jedoch hohe Belastungen durch die Umgebungsbedingungen im oder am Getriebe (hohe Temperatur, Temperaturwechsel, hohe Beschleunigungen, direkter Kontakt mit Getriebeöl) aushalten. Wegbausteuergeräte sind in den Bereichen des Kraftfahrzeugs angeordnet, in denen sie niedrigen Belastungen durch die Umgebungsbedingungen ausgesetzt sind. Allerdings steigt durch die räumliche Trennung vom Getriebe der Aufwand für die Verkabelung zwischen Steuergerät und Sensoren beziehungsweise Aktuatoren des Getriebes.

Weiterhin besteht die Möglichkeit, Motorsteuerung und Getriebesteuerung in einem Antriebssteuergerät, der sogenannten "Powertrain Control Unit" (PCU) zu kombinieren. Antriebssteuergeräte werden üblicherweise im Motorraum verbaut und müssen daher für die dort herrschenden, hohen Belastungen ausgelegt sein. Vorteil der Antriebssteuergeräte ist die Kombination von Motor- und Getriebesteuerung, sowie kurze Verkabelung zwischen dem Steuergerät und Sensoren, Aktuatoren und Ventilen. Die EP 1 489 339 A1 zeigt ein als Anbausteuergerät ausgebildetes Steuergerät mit einer Detektoreinrichtung, die einen auf eine fahrzeugseitige Welle aufsetzbaren Winkelstellungsdetektor aufweist, der einen drehfest mit der Welle kuppelbaren Detektorrotor und einen ortsfest im Steuergerät angeordneten Detektorstator zur Detektion der Drehwinkelstellung der Welle aufweist. Drehwinkelrotor und Drehwinkelstator sind zur genauen Winkeldetektion unmittelbar benachbart angeordnet. Da der Detektorstator ortfest im Steuergerät angeordnet und der Detektorrotor drehfest auf der Welle gelagert ist, müssen Welle und Steuergerät exakt ausgerichtet sein.

### Offenbarung der Erfindung

Es ist vorgesehen, dass die Welle schwenkbeweglich mit dem Detektorrotor gekuppelt ist. Durch die schwenkbewegliche Kupplung des Detektorrotors mit der Welle können Toleranzen, die sich aus der Montage des Steuergerätes an sich sowie aus der Montage des Steuergerätes im Kraftfahrzeug ergeben, ausgeglichen und ein definierter Abstand von Detektorrotor zu Detektorstator auch bei einer unpräzisen Ausrichtung der Welle im Kraftfahrzeug gewährleistet werden. Vorzugsweise werden Detektorrotor und Detektorstator durch die schwenkbewegliche Kupplung - unabhängig von Toleranzen außerhalb des Steuergerätes - parallel beziehungsweise koaxial zueinander ausgerichtet. Das Steuergerät ist insbesondere ein Anbausteuergerät, das auf einem Gehäuse des automatischen Getriebes anordenbar ist. Die Welle ist insbesondere eine Wählhebelwelle, die mit einem dem Getriebe zugeordneten Wählhebel verbunden ist.

Insbesondere ist vorgesehen, dass der Winkelstellungsdetektor ein zwischen der Welle und dem Detektorrotor angeordnetes Adapterelement zur drehfesten Kupplung aufweist. Der Detektorrotor wird über das Adapterelement drehfest an die Welle gekuppelt. Durch die Verwendung eines Adapterelements kann der gleiche Detektorrotor für unterschiedlich ausgebildete Wellen verwendet werden.

Weiterhin ist mit Vorteil vorgesehen, dass der Detektorrotor ein das Adapterelement zumindest bereichsweise aufnehmendes Aufnahmeelement aufweist. Der Detektorrotor wird durch Aufnahme des Adapterelements in sein Aufnahmeelement drehfest mit dem Adapterelement gekuppelt.

Nach einer Weiterbildung der Erfindung ist vorgesehen, dass das Adapterelement einen Gelenkkopf und das Aufnahmeelement eine Gelenkpfanne eines Gelenks zur schwenkbeweglichen Kupplung bildet. Durch das von dem Adapterelement und dem Aufnahmeelement gebildeten Gelenk wird der Detektorrotor an die Welle gelenkig angebunden beziehungsweise gelenkig mit der Welle wirkverbunden. Die gelenkige Anbindung ermöglicht die schwenkbewegliche Kupplung der Welle mit dem Detektorrotor.

In einer vorteilhaften Ausgestaltung der Erfindung ist vorgesehen, dass das Adapterelement als drehfest auf die Welle aufsteckbares Adapterringelement ausgebildet ist. Ein Adapterringelement benötigt besonders wenig Bauraum.

Nach einer Weiterbildung der Erfindung ist vorgesehen, dass eine Mantelfläche des Adapterringelements zumindest bereichsweise als Kugelzone ausgebildet ist. Durch die Ausbildung der Mantelfläche des Adapterringelements als Kugelzone ist dieses als der Gelenkkopf des Gelenks ausgebildet. Der Aufnahmebereich des Aufnahmeelements zur Aufnahme des Adapterelements weist insbesondere eine entsprechende Aufnahmeinnenfläche auf. Alternativ ist der Aufnahmeraum zum Beispiel zylinderförmig ausgebildet.

In einer vorteilhaften Ausgestaltung der Erfindung ist vorgesehen, dass das Adapterringelement an seiner Mantelfläche mindestens zwei Vorsprünge aufweist, die zur Drehmitnahme in Ausnehmungen des Aufnahmeelements eingreifen. Durch die so gebildeten Ausnehmungs-Vorsprung-Anordnungen zwischen dem Adapterelement und dem Detektorrotor wird der Detektorrotor drehfest mit der Welle gekuppelt.

Nach einer Weiterbildung der Erfindung ist vorgesehen, dass die Vorsprünge gegenüberliegend angeordnet und um ihre Verbindungsachse schwenkbar in den Ausnehmungen gelagert sind. Dazu bilden je zwei bezüglich des Adapterringelements gegenüberliegende Ausnehmungs-Vorsprung-Anordnungen ein Lager, das ein Schwenken des Adapterelements beziehungsweise der Welle gegenüber dem Detektorrotor um die Verbindungsachse ermöglicht. Die Verbindungsachse der gegenüberliegend angeordneten Vorsprünge ist somit eine erste Schwenkachse.

Weiterhin ist mit Vorteil vorgesehen, dass die Vorsprünge als im Wesentlichen zylinderförmige Zapfen ausgebildet sind. Die Längsachsen der Zapfen liegen in der Verbindungsachse der gegenüberliegend angeordneten Vorsprünge.

In einer vorteilhaften Ausgestaltung der Erfindung ist vorgesehen, dass die Ausnehmungen als im Wesentlichen in Längsrichtung der Welle verlaufende Nuten ausgebildet sind. Die Nuten sind so ausgerichtet, dass sie die drehfeste Kupplung der Welle und senkrecht dazu ein Verschieben der Vorsprünge erlauben.

Nach einer Weiterbildung der Erfindung ist vorgesehen, dass die Vorsprünge zum Verschwenken um eine zweite Schwenkachse in den Nuten verschiebbar gelagert sind. Werden die gegenüberliegenden Vorsprünge in den Nuten verschoben, so ergibt sich durch die Gestaltung des Adapterelements als Gelenkkopf und des Aufnahmeelements als Gelenkpfanne ein Verschwenken um eine zu der als erste Schwenkachse ausgebildeten Verbindungsachse senkrecht angeordnete zweite Schwenkachse. Durch die Möglichkeit zum Verschwenken des Detektorrotors gegenüber der Welle um zwei senkrecht aufeinander stehende Schwenkachsen können der Detektorrotor und die Welle gegeneinander eine Torkelbewegung ausführen. Durch diese Torkelbewegung können mögliche Toleranzen bei der Montage des Steuergeräts und eine mögliche Schiefstellung der Welle ausgeglichen werden.

Schließlich ist mit Vorteil vorgesehen, dass der Detektorrotor im Steuergerät um eine feste Drehachse drehbar gelagert ist. Durch die schwenkbewegliche Kupplung des Detektorrotors mit der Welle bei gleichzeitiger Lagerung des Detektorrotors im Steuergerät um eine feste Drehachse wird der Detektorrotor im Steuergerät exakt ausgerichtet. Dies ermöglicht eine präzise Messung beziehungsweise Erfassung der Drehwinkelstellung der Welle und somit eine präzise Ermittlung der Stellung des Wählhebels.

### Kurze Beschreibung der Zeichnungen

Die Erfindung wird nachfolgend in einem Ausführungsbeispiel anhand der zugehörigen Zeichnungen näher erläutert. Es zeigen
- Figur 1: ein Steuergerät eines automatischen Getriebes in einer Explosionsdarstellung,
- Figur 2: einen Schnitt durch eine Wählhebelstellungs-Detektoreinrichtung des Steuergeräts der Figur 1,
- Figur 3: eine Detailansicht eines Detektorrotors und eines Adapterelements des Steuergeräts und
- Figur 4: das montierte Steuergerät der Figur 1 ohne Deckel.

### Ausführungsform(en) der Erfindung

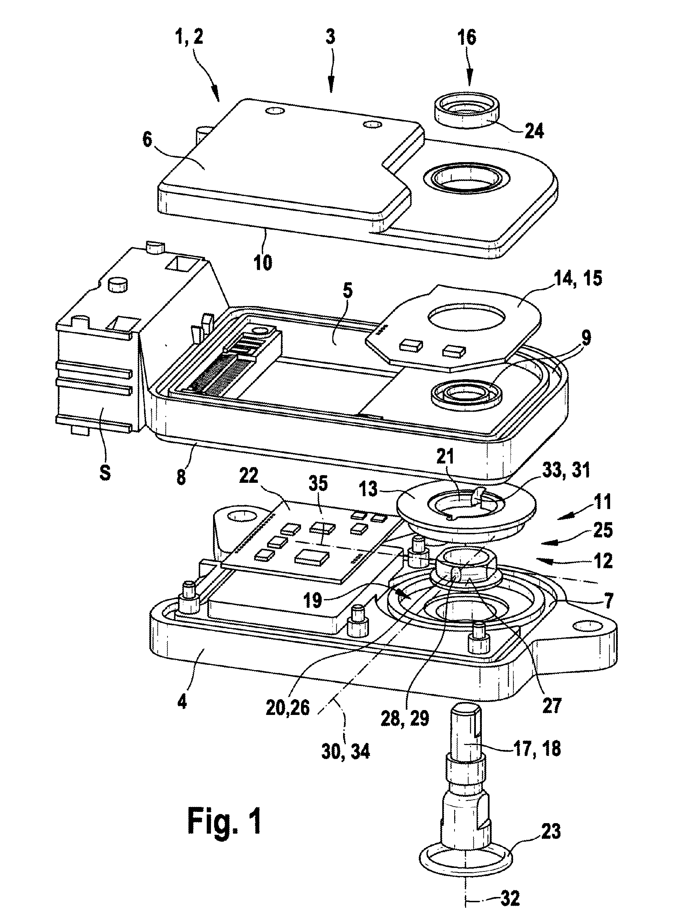

Die Figur 1 zeigt in einer Explosionsdarstellung ein Steuergerät 1 eines nicht dargestellten automatischen Getriebes für ein Kraftfahrzeug. Das Steuergerät 1 ist als Anbausteuergerät 2 zur Montage an einem nicht dargestellten Gehäuseteil des automatischen Getriebes ausgebildet. Das Steuergerät 1 weist ein Steuergerätgehäuse 3 auf, das aus einem Gehäuseunterteil 4, einem auf dem Gehäuseunterteil 4 angeordneten Gehäusezwischenteil 5, sowie einem darauf angeordneten Gehäusedeckel 6 besteht. Das auch als Grundplatte bezeichnete Gehäuseunterteil 4 besteht vorzugsweise aus Aluminium. Das auch als Steckergehäuse bezeichnete Gehäusezwischenteil 5 und der Gehäusedeckel 6 bestehen vorzugsweise aus Kunststoff. Die Verbindungen des Gehäuseunterteils 4, des Gehäusezwischenteils 5 und des Gehäusedeckels 6 werden zum Beispiel durch Nut-Federklebungen zwischen den einzelnen Komponenten gegen den Außenbereich abgedichtet. Dazu weist das Gehäuseunterteil 4 auf seiner Oberseite eine umlaufende Nut 7 und das Gehäusezwischenteil 5 auf seiner Unterseite eine umlaufende Feder 8 auf. Zur Verbindung mit dem Gehäusedeckel 6 weist das Gehäusezwischenteil 5 auf seiner Oberseite eine umlaufende Nut 9 und der Gehäusedeckel 6 auf seiner Unterseite eine umlaufende Feder 10 auf.

Das Steuergerät 1 weist eine Wählhebelstellungs-Detektoreinrichtung 11 auf. Die Wählhebelstellungs-Detektoreinrichtung 11 weist einen Winkelstellungsdetektor 12 mit einem Detektorrotor 13 und einem ortsfest im Steuergerät 1 angeordneten, als Detektor-Leiterplatte 14 ausgebildeten Detektorstator 15 auf. Quer zur lagenweisen Anordnung des Gehäuseunterteils 4, des Gehäusezwischenteils 5 und des Gehäusedeckels 6 verläuft im Steuergerät 1 ein durchgehender Aufnahmekanal 16 zur Aufnahme einer als Wählhebelwelle 17 ausgebildeten Welle 18. Ein Bereich um den Aufnahmekanal 16 zwischen dem Gehäuseunterteil 4 und dem Gehäusezwischenteil 5 ist als Detektoraufnahmeraum 19 zur Aufnahme des Detektorrotors 13 und eines Adapterelements 20 ausgebildet. Der Detektorrotor 13 weist ein Aufnahmeelement 21 zur Aufnahme des Adapterelements 20 auf. Bei einer in den Aufnahmekanal 16 eingebrachten Welle 18 ist das Adapterelement 20 zwischen der Welle 18 und dem Detektorrotor 13 angeordnet. Der als Detektor-Leiterplatte 14 ausgebildete Detektorstator 15 ist in dem Bereich zwischen dem Gehäusezwischenteil 5 und dem Gehäusedeckel 6 oberhalb des Detektoraufnahmeraums 19 angeordnet. Auf dem Gehäuseunterteil 4 ist benachbart zum Winkelstellungsdetektor 12 ein Schaltungsträger 22 zur Getriebesteuerung angeordnet. Auf einer den Winkelstellungsdetektor 12 abgewandten Seite des Schaltungsträgers 22 befindet sich eine Steckerbuchse S, über die das Steuergerät 1 mit den Komponenten des automatischen Getriebes elektrisch verbindbar ist.

Das Steuergerät 1 ist als Anbausteergerät 2 ausgebildet, das in einem Bereich des automatischen Getriebes angeordnet wird, in dem die Welle 18 aus dem Getriebegehäuse herausragt. Zur Abdichtung der Wählhebelstellungs-Detektoreinrichtung 11 gegen den Außenbereich ist das Gehäuseunterteil 4 mit einem um die Welle 18 verlaufenden, zwischen dem Gehäuseunterteil 4 und dem Getriebegehäuse angeordneten O-Ring 23 abgedichtet. Am Gehäusedeckel 6 dichtet eine Radialwellendichtung 24 die aus dem Aufnahmekanal 16 austretende Welle 18 gegen das Steuergerätegehäuse 3 ab. Somit ist der Detektoraufnahmeraum 19 gegen den Außenbereich des Steuergeräts 1 abgedichtet.

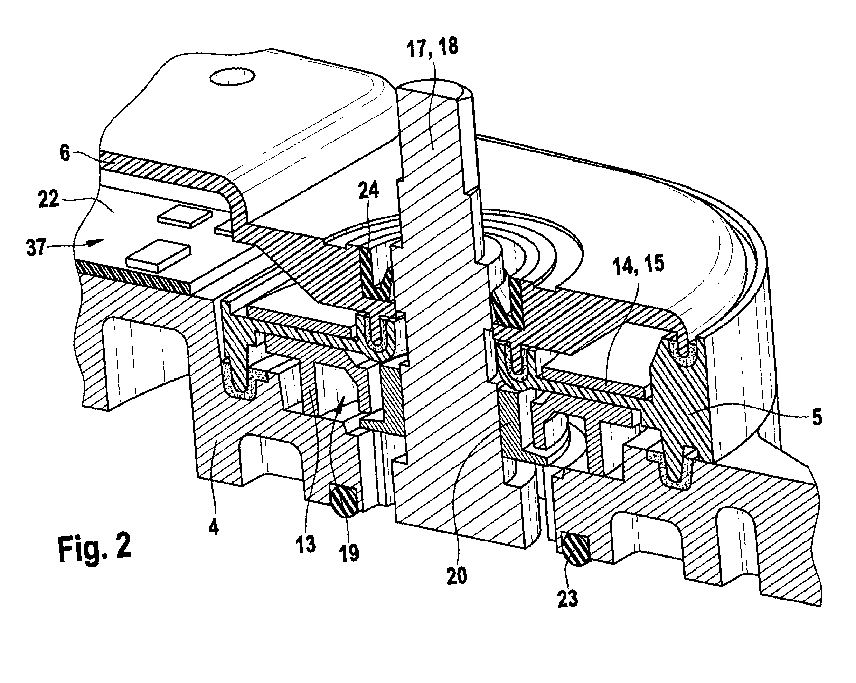

Die Figur 2 zeigt das montierte Steuergerät 1 im Bereich der
Wählhebelstellungs-Detektoreinrichtung 11 in einer Schnittdarstellung. Hierbei ist die Abdichtung des Detektoraufnahmeraums 19 auf der Unterseite mittels des O-Rings 23 und auf der Oberseite mittels der Radialwellendichtung 24 sichtbar. Weiterhin zeigt die Figur 2 die Anordnung des Adapterelements 20 zwischen dem Detektorrotor 13 und der Welle 18 zur drehfesten und schwenkbeweglichen Kupplung der Welle 18 mit dem Detektorrotor 13.

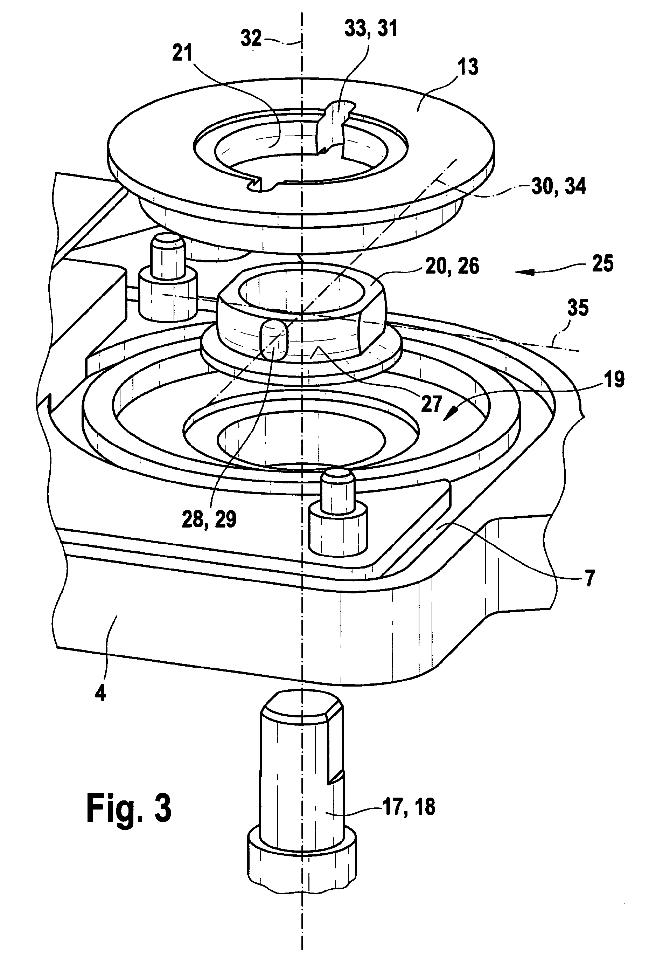

Die Figur 3 zeigt in einer Explosionsdarstellung die schwenkbewegliche Kupplung des Detektorrotors 13 im Detail. Der Detektorrotor 13 weist das Aufnahmeelement 21 auf, das - zumindest bereichsweise - das Adapterelement 20 aufnimmt. Der Detektorrotor 13 und das Adapterelement 20 bilden ein Gelenk 25 zur schwenkbeweglichen Kupplung des Detektorrotors 13 an der Welle 18. Dazu ist das Adapterelement 20 als Gelenkkopf und das Aufnahmeelement 21 als Gelenkpfanne des Gelenks 25 ausgebildet. Das Adapterelement 20 ist als drehfest auf die Welle 18 aufsteckbares Adapterringelement 26 ausgebildet.
Eine Mantelfläche 27 des Adapterringelements 26 ist zumindest bereichsweise als Kugelzone ausgebildet. Das Adapterelement 20 weist an seiner Mantelfläche 27 zwei einander gegenüberliegend angeordnete Vorsprünge 28 auf, die bereichsweise als im Wesentlichen kreiszylinderförmige Zapfen 29 ausgebildet sind, deren Rotationsachsen koaxial zueinander ausgerichtet sind, so dass sie eine Verbindungsachse 30 bilden. Bevorzugt weisen die Vorsprünge jeweils zumindest eine Kugelzone auf. In einer weiteren, hier nicht dargestellten Ausführungsform sind die Vorsprünge 28 als (gänzlich) kreiszylinderförmige Zapfen (29) ausgebildet. Die Vorsprünge 28 sind um die Verbindungsachse 30 schwenkbar in Ausnehmungen 31 des Detektorrotors beziehungsweise des Aufnahmeelements 21 gelagert. Die Ausnehmungen 31 sind als im Wesentlichen in Längsrichtung 32 der Welle verlaufende Nuten 33 ausgebildet.

Es ergibt sich folgende Funktion des vom Adapterelement 20 und dem Aufnahmeelement 21 gebildeten Gelenks 25: Ist die Welle 18 gegenüber dem Steuergerätgehäuse 3 des Steuergeräts 1 und somit gegenüber dem Detektoraufnahmeraum 19 nicht korrekt ausgerichtet, so kann der Detektorrotor 13 durch die schwenkbewegliche Kupplung an die Welle 18 eine Taumelbeziehungsweise Torkelbewegung durchführen, sodass er sich bezüglich des Steuergeräts 1 in einer festen Schwenkebene verschwenkt. Diese Schwenkebene wird durch eine Lagerung des Detektorrotors 13 in dem Detektoraufnahmeraum 19 gewährleistet. Um die Winkelstellung der Welle 18 korrekt auszulesen beziehungsweise zu erfassen, muss das Gelenk 25 gleichzeitig eine schwenkbewegliche, aber drehfeste Kupplung der Welle 18 mit dem Detektorrotor 13 gewährleisten. Die drehfeste Kupplung wird durch das Eingreifen der Zapfen 29 in die in Längsrichtung 32 verlaufenden Nuten 33 erreicht. Dabei erlauben die einander gegenüberliegenden Zapfen 29 ein Schwenken von Detektorrotor 13 und der Welle 18 gegeneinander um die Verbindungsachse 30. Die Verbindungsachse 30 ist somit eine erste Schwenkachse 34. Die in Längsrichtung 32 ausgerichteten Nuten 33 erlauben ein Verschieben der Zapfen 29, so dass insbesondere durch die Ausbildung des Adapterelements 20 als Gelenkkopf und des Aufnahmeelements 21 als Gelenkpfanne ein Verschwenken von Detektorrotor 13 und Welle 18 gegeneinander um eine zweite Schwenkachse 35 möglich ist. Die zweite Schwenkachse 35 ist senkrecht zu der ersten Schwenkachse 34 angeordnet. Somit erlaubt das Gelenk 25 ein Verschwenken von Welle 18 und Detektorrotor 13 in einer Taumel- beziehungsweise Torkelbewegung. Durch die drehbare Lagerung des Detektorrotors 13 im Detektoraufnahmeraum 19 ergibt sich eine bezüglich des Steuergeräts 1 feste Schwenk- beziehungsweise Verdrehrichtung des Detektorrotors 13.

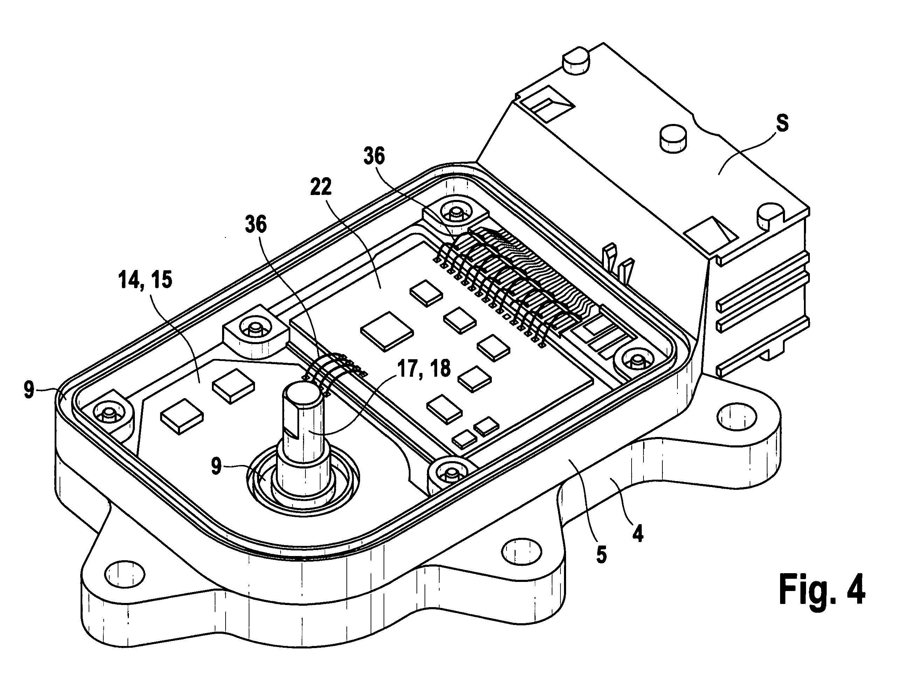

Die Figur 4 zeigt das montierte Steuergerät 1 ohne den Gehäusedeckel 6 in einer perspektivischen Draufsicht. Dabei ist der Detektorstator 15 auf dem Gehäusezwischenteil 5 angeordnet und zum Beispiel durch eine Klebung befestigt. Der als Detektor-Leiterplatte 14 ausgebildete Detektorstator 15 ist mittels Bondverbindungen 36 elektrisch mit dem Schaltungsträger 22 verbunden.

Der Schaltungsträger ist insbesondere eine Multlayer-Keramik (LTCC) und wird mittels Klebung auf den Gehäuseunterteil 4 des Steuergerätegehäuses 3 befestigt und zum Beispiel mittels Bondverbindungen 36 elektrisch mit dem Gehäusezwischenteil 5 und der darauf angeordneten Steckerbuchse S verbunden. Durch die direkte Montage des Schaltungsträgers 22 auf dem Gehäuseunterteil 4 kann eine gute Abfuhr der beim Betrieb der Schaltung entstehenden Verlustwärme gewährleistet werden. Bei der Montage des Steuergeräts 1 auf dem automatischen Getriebe wird die Welle 18 durch den Aufnahmekanal 16 des Steuergeräts 1 geführt und das Steuergerät 1 dadurch auf dem Getriebe zentriert. Gleichzeitig greift die Welle 18 in das Adapterelement 20 ein, wodurch der Detektorrotor 13 gelenkig an die Welle 18 angebunden wird.

Es ergeben sich folgende weitere Vorteile: Durch die gezeigte Anordnung der Detektor-Leiterplatte 14 und des Schaltungsträgers 22 kann die elektrische Kontaktierung mittels Bondverbindungen 36 durch Aluminium-Bonds erfolgen. Durch diese direkte Verbindung ohne zusätzliche Verdrahtungsträger ergibt sich eine kostengünstige Kontaktierung.

Der Innenraum des in den Figuren 1, 2 und 4 gezeigten Steuergeräts 1 ist in zwei separate, gegeneinander gedichtete Räume getrennt. In einem vollständig gedichteten Elektronikraum 37 befindet sich der Schaltungsträger 22 sowie die Detektorelektronik. Der Detektoraufnahmeraum 19, durch den der Aufnahmekanal 16 zur Aufnahme der Welle 18 verläuft ist mit zwei zusätzlichen Dichtungen, dem Radialwellendichtring 24, sowie dem O-Ring 23 gegen die Umgebung abgedichtet. Da in dem Detektoraufnahmeraum 19 lediglich der Detektorrotor 13 gelagert ist, der keine empfindlichen elektronischen Bauelemente enthält, können die Dichtungen 23, 24 in einer weiteren Ausführungsvariante entfallen.

Die Funktion des Winkelstellungsdetektors 12 beruht auf einem berührungslosen, induktiven Messprinzip.

## Patentansprüche

1. Steuergerät (1) eines automatischen Getriebes für ein Kraftfahrzeug, mit einer Wählhebelstellungs-Detektoreinrichtung (11) die einen auf eine fahrzeugseitige Welle (18) aufsetzbaren Winkelstellungs-Detekto (12) aufweist, wobei sich die Welle (18) abhängig von der Stellung eines Wählhebels in ihrer Drehwinkelstellung verändert und der Winkeistellungs-Detektor (12) einen drehfest mit der Welle (18) kuppelbaren Detektorrotor (13) und einen ortsfest im Steuergerät (1) angeordneten Detektorstatör (15) aufweist, **dadurch gekennzeichnet, dass** die Welle (18) schwenkbeweglich mit dem Detektorrotor (13) gekuppelt ist.

2. Steuergerät nach Anspruch 1, **dadurch gekennzeichnet, dass** der Winkeistellungsdetektor (12) ein zwischen der Welle (18) und dem Detektorrotor (13) angeordnetes Adapterelement (20) zur drehfesten Kupplung aufweist.

3. Steuergerät nach Anspruch 2, **dadurch gekennzeichnet, dass** der Detektorrotor (13) ein das Adapterelement (20) zumindest bereichsweise aufnehmendes Aufnahmeelement (21) aufweist.

4. Steuergerät nach Anspruch 3, **dadurch gekennzeichnet, dass** das Adapterelement (20) einen Gelenkkopf und das Aufnahmeelement eine Gelenkpfanne eines Gelenks (25) zur schwenkbeweglichen Kupplung bildet.

5. Steuergerät nach einem der Ansprüche 2-4, **dadurch gekennzeichnet, dass** das Adapterelement (20) als drehfest auf die Welle (18) aufsteckbares Adapterringelement (26) ausgebildet ist.

6. Steuergerät nach Anspruch 5, **dadurch gekennzeichnet, dass** eine Mantelfläche (27) des Adapterringelements (26) zumindest bereichsweise als Kugelzone ausgebildet ist.

7. Steuergerät nach Anspruch 6 und einem der Ansprüche 3 und 4, **dadurch gekennzeichnet, dass** das Adapterringelement (26) an seiner Mantelfläche (27) mindestens zwei Vorsprünge (28) aufweist, die zur Drehmitnahme in Ausnehmungen (31) des Aufnahmeelements (21) eingreifen.

8. Steuergerät nach Anspruch 7, **dadurch gekennzeichnet, dass** die Vorsprünge (28) gegenüberliegend angeordnet und um ihre Verbindungsachse (30) schwenkbar in den Ausnehmungen (31) gelagert sind.

9. Steuergerät nach einem der Ansprüche 7 und 8, **dadurch gekennzeichnet, dass** die Vorsprünge (28) als im Wesentlichen zylinderförmige Zapfen (29) ausgebildet sind.

10. Steuergerät nach einem der Ansprüche 7-9, **dadurch gekennzeichnet, dass** die Ausnehmungen (31) als im Wesentlichen in Längsrichtung (32) der Welle (18) verlaufenden Nuten (33) ausgebildet sind.

11. Steuergerät nach Anspruch 10, **dadurch gekennzeichnet, dass** die Vorsprünge (28) zum Verschwenken um eine zweite Schwenkachse (35) in den Nuten (33) verschiebbar gelagert sind.

12. Steuergerät nach einem der vorhergehenden Ansprüche, **dadurch gekennzeichnet, dass** der Detektorrotor (13) im Steuergerät (1) um eine feste Drehachse drehbar gelagert ist.

## Claims

1. Control unit (1) of an automatic gearbox for a motor vehicle, having a selector lever position detector device (11) which has an angle position detector (12) which can be placed onto a vehicle-side shaft (18), with the rotational angle position of the shaft (18) being varied as a function of the position of a selector lever, and with the angle position detector (12) having a detector rotor (13), which can be rotationally fixedly coupled to the shaft (18), and a detector stator (15) which is arranged in a positionally fixed manner in the control unit (1), **characterized in that** the shaft (18) is coupled in a pivotally movable manner to the detector rotor (13).

2. Control unit according to Claim 1, **characterized in that** the angle position detector (12) has an adapter element (20), which is arranged between the shaft (18) and the detector rotor (13), for rotationally fixed coupling.

3. Control unit according to Claim 2, **characterized in that** the detector rotor (13) has a receiving element (21) which receives the adapter element (20) at least in regions.

4. Control unit according to Claim 3, **characterized in that** the adapter element (20) forms a joint head and the receiving element forms a joint socket of a joint (25) for pivotally movable coupling.

5. Control unit according to one of Claims 2-4, **characterized in that** the adapter element (20) is designed as an adapter ring element (26) which can be rotationally fixedly plugged onto the shaft (18).

6. Control unit according to Claim 5, **characterized in that** a lateral surface (27) of the adapter ring element (26) is formed at least in regions as a spherical zone.

7. Control unit according to Claim 6 and one of Claims 3 and 4, **characterized in that** the adapter ring element (26) has, on its lateral surface (27), at least two projections (28) which engage, for rotational driving, into recesses (31) of the receiving element (21).

8. Control unit according to Claim 1, **characterized in that** the projections (28) are arranged opposite one another and are mounted in the recesses (31) so as to be pivotable about their connecting axis (30).

9. Control unit according to one of Claims 7 and 8, **characterized in that** the projections (28) are formed as substantially cylindrical pegs (29).

10. Control unit according to one of Claims 7-9, **characterized in that** the recesses (31) are formed as grooves (33) running substantially in the longitudinal direction (32) of the shaft (18).

11. Control unit according to Claim 10, **characterized in that** the projections (28) are movably mounted in the grooves (33) for pivoting about a second pivot axis (35).

12. Control unit according to one of the preceding claims, **characterized in that** the detector rotor (13) is mounted in the control unit (1) so as to be rotatable about a fixed rotational axis.

## Revendications

1. Appareil de commande (1) d'une transmission automatique pour un véhicule automobile, comprenant un dispositif de détection de position du levier de sélection (11), qui présente un détecteur de position angulaire (12) pouvant être posé sur un arbre (18) du côté du véhicule, l'arbre (18) modifiant sa position d'angle de rotation en fonction de la position d'un levier de sélection, et le détecteur de position angulaire (12) présentant un rotor de détecteur (13) pouvant être accouplé de manière solidaire en rotation à l'arbre (18) et un stator de détecteur (15) disposé fixement dans l'appareil de commande (1), **caractérisé en ce que** l'arbre (18) est accouplé de manière pivotante au rotor de détecteur (13).

2. Appareil de commande selon la revendication 1, **caractérisé en ce que** le détecteur de position angulaire (12) présente un élément adaptateur (20) disposé entre l'arbre (18) et le rotor de détecteur (13) en vue d'un accouplement solidaire en rotation.

3. Appareil de commande selon la revendication 2, **caractérisé en ce que** le rotor de détecteur (13) présente un élément de réception (21) recevant l'élément adaptateur (20) au moins en partie.

4. Appareil de commande selon la revendication 3, **caractérisé en ce que** l'élément adaptateur (20) forme une rotule et l'élément de réception forme une cavité articulaire d'une articulation (25) en vue d'un accouplement pivotant.

5. Appareil de commande selon l'une quelconque des revendications 2 à 4, **caractérisé en ce que** l'élément adaptateur (20) est réalisé sous forme d'élément adaptateur annulaire (26) pouvant être enfiché de manière solidaire en rotation sur l'arbre (18).

6. Appareil de commande selon la revendication 5, **caractérisé en ce qu'**une surface d'enveloppe (27) de l'élément adaptateur annulaire (26) est réalisée au moins en partie sous forme de zone sphérique.

7. Appareil de commande selon la revendication 6 et selon l'une quelconque des revendications 3 et 4, **caractérisé en ce que** l'élément adaptateur annulaire (26) présente sur sa surface d'enveloppe (27) au moins deux saillies (28), qui viennent en prise en vue d'un entraînement en rotation dans des évidements (31) de l'élément de réception (21).

8. Appareil de commande selon la revendication 7, **caractérisé en ce que** les saillies (28) sont disposées en regard et sont montées dans les évidements (31) de manière à pouvoir pivoter autour de leur axe de connexion (30).

9. Appareil de commande selon l'une quelconque des revendications 7 et 8, **caractérisé en ce que** les saillies (28) sont réalisées sous forme de tourillons (29) essentiellement de forme cylindrique.

10. Appareil de commande selon l'une quelconque des revendications 7 à 9, **caractérisé en ce que** les évidements (31) sont réalisés sous forme de rainures (33) s'étendant essentiellement dans la direction longitudinale (32) de l'arbre (18).

11. Appareil de commande selon la revendication 10, **caractérisé en ce que** les saillies (28) sont montées de manière déplaçable dans les rainures (33) en vue de pivoter autour d'un deuxième axe de pivotement (35).

12. Appareil de commande selon l'une quelconque des revendications précédentes, **caractérisé en ce que** le rotor de détecteur (13) est monté dans l'appareil de commande (1) de manière à pouvoir tourner autour d'un axe de rotation fixe.
